Europäisches Patentamt

European Patent Office

Office européen des brevets

(19)

(11) Veröffentlichungsnummer: **0 402 930**
**A2**

(12) **EUROPÄISCHE PATENTANMELDUNG**

(21) Anmeldenummer: **90111271.4**

(22) Anmeldetag: **15.06.90**

(51) Int. Cl.⁵: **G01V 9/00**

(30) Priorität: **16.06.89 DE 3919686**
**23.03.90 DE 9003429 U**

(43) Veröffentlichungstag der Anmeldung:
**19.12.90 Patentblatt 90/51**

(84) Benannte Vertragsstaaten:
**AT CH DE ES FR GB IT LI**

(71) Anmelder: **Schumacher, Erwin**
**Osterholzer Dorfstrasse 61**
**D-2800 Bremen 44(DE)**

(72) Erfinder: **Schumacher, Erwin**
**Osterholzer Dorfstrasse 61**
**D-2800 Bremen 44(DE)**

(74) Vertreter: **Eisenführ, Speiser & Strasse**
**Martinistrasse 24**
**D-2800 Bremen 1(DE)**

(54) **Sensoreinrichtung.**

(57) Eine Sensoreinrichtung zur Detektion von kosmisch-terrestrischen und terrestrisch-kosmischen Energiefeldern und Energieflüssen enthält ein Sensorelement (S) und flexible Haltemittel (13, 14) zum Halten des Sensorelementes (S) durch einen Benutzer derart, daß das Sensorelement (S) gegenüber dem Benutzer bewegbar bleibt. Das Sensorelement (S) weist mindestens einen elektrischen Kondensator (1′) auf, dessen eine Elektrode mit einer oberhalb des Kondensators (1′) angeordneten und die Haltemittel (13, 14) aufweisenden oberen Antenne (11, 12) und dessen andere Elektrode mit einer unterhalb des Kondensators (1′) angeordneten unteren Antenne (4, 5) elektrisch leitend verbunden ist.

Fig. 3

EP 0 402 930 A2

## Sensoreinrichtung

Die Erfindung betrifft eine Sensoreinrichtung zur Detektion von kosmisch-terrestrischen und terrestrisch-kosmischen Energiefeldern und Energieflüssen, mit einem Sensorelement und mit flexiblen Haltemitteln zum Halten des Sensorelementes durch einen Benutzer derart, daß das Sensorelement gegenüber dem Benutzer bewegbar bleibt.

Bei den zu untersuchenden Energiefeldern und Energieflüssen handelt es sich insbesondere um Magnetfelder, elektrische Felder, Gravitationsfelder, elektromagnetische Wellen im Millimeter-, Zentimeter-, Dezimeter- und Meter-Wellenbereich, positive und negative Ionenfelder und Ionenflüsse, ungebremste und gebremste Neutronenstrahlung, radioaktive Strahlung, Infrarotstrahlung und Photonenstrahlung. Die meisten der vorgenannten Energiefelder und Energieflüsse sind quantitativ sehr schwach, so daß sie nur mit sehr empfindlichen Sensoren erfaßt werden können.

Zur Detektion der zuvor aufgeführten Energiefelder und Energieflüsse sind zahlreiche Sensoreinrichtungen bekannt, wie z.B. elektrische Feldstärkenmeßgeräte zur Messung von elektromagnetischen Feldern und Wellen, Förstersonden und Geomagnetometern zur Erfassung von magnetischen Feldern, Geigerzähler zur Detektion von radioaktiver Strahlung, hochempfindliche Infrarotdioden für Infrarotstrahlung und Luxmeter und Spezialdioden mit Elektronenvervielfacher zur Erfassung von Photonenstrahlung. Diese bekannten Sensoren reagieren jedoch nur schmalbandig auf jeweils nur einen Teil der oben aufgeführten Energiefelder und Energieflüsse.

Es sind ebenfalls Sensoreinrichtungen bekannt, die unter Ausnutzung der menschlichen Biostrahlung arbeiten, welche durch die Kirlianfotografie wissenschaftlich eindeutig nachgewiesen ist. Als Beispiel sei auf die Sensoreinrichtung von Dr. Oberbach unter der Bezeichnung "Biotensor" und auf die Sensoreinrichtung der Firma Rayonex unter der Bezeichnung "Rayotest" verwiesen. Die Sensoreinrichtungen sind wegen ihres breitbandigen Wirkungsbereiches und ihrer hohen Empfindlichkeit für die Feststellung von gesundheitsschädlichen geophatogenen Zonen geeigneter als die oben erwähnten schmalbandig wirkenden Sensoreinrichtungen und Meßgeräte.

Die unter Ausnutzung der menschlichen Biostrahlung funktionierenden bisher bekannten Sensoreinrichtungen haben jedoch den großen Nachteil, daß sie nicht immer eindeutig anzeigen, sondern beim Gebrauch durch wechselnde innere Auf- und Entladungen ein unerwünschtes Wechselverhalten zeigen, ohne daß der Benutzer dies bemerkt.

Daher ist es Aufgabe der Erfindung, eine Sensoreinrichtung der eingangs genannten Art so zu verbessern, daß sie empfindlicher als alle bisher bekannten Breitbandsensoreinrichtungen ist, kein Wechselverhalten zeigt, sondern die jeweilige Energiefeld- und Strahlungssituation eindeutig anzeigt und nur einen einfachen Aufbau benötigt.

Die Aufgabe wird dadurch gelöst, daß das Sensorelement mindestens einen elektrischen Kondensator aufweist, dessen eine Elektrode mit einer oberhalb des Kondensators angeordneten und die Haltemittel aufweisenden oberen Antenne und dessen andere Elektrode mit einer unterhalb des Kondensators angeordneten unteren Antenne elektrisch leitend verbunden ist.

Die erfindungsgemäße Sensoreinrichtung basiert auf der Nutzung eines besonderen radiästhetisch-physikalischen Wirkungseffektes. Wenn nämlich die Sensoreinrichtung an den flexiblen Haltemitteln vom Benutzer gehalten wird, entstehen durch bestimmte Wirkungsmechanismen in und zwischen den leitenden Elektroden des Kondensators und den dazwischenliegenden Dielektrika freie Elektronen. Hierdurch wird der Kondensator aufgeladen, und zwar in der Regel mit Spannungen im Millivoltbereich. Während des Aufladevorganges erfolgt gleichzeitig im Kondensator eine relativ starke seitliche Schub- und Spinnwirkung. Über Rechtsspinnzonen kreist dann das Sensorelement nach rechts, über Linksspinnzonen nach links. Über Indifferenzzonen bewegt sich das Sensorelement in Richtung des Zonenverlaufes.

Die erfindungsgemäße Sensoreinrichtung ist erheblich empfindlicher als die bisher bekannten unter Mitwirkung der menschlichen Biostrahlung arbeitenden Sensoreinrichtungen. Insbesondere zeigt sie kein verwirrendes Wechselverhalten wie die bisherigen Sensoreinrichtungen dieser Art und ist in der Hand des Benutzers ein sehr empfindlicher und eindeutig anzeigender Indikator der jeweiligen radiästhetischen Situation und ermöglicht hierdurch eindeutige und sichere Ergebnisse. Dabei ist die erfindungsgemäße Sensoreinrichtung sowohl in vertikalter als auch in schräger und horizontaler Lage voll funktionsfähig.

Die erfindungsgemäße Sensoreinrichtung unterscheidet sich gegenüber den bisher bekannten unter Mitwirkung der menschlichen Biostrahlung arbeitenden Sensoreinrichtung ganz wesentlich dadurch, daß die für die Wirkung der erfindungsgemäßen Sensoreinrichtung verantwortliche Aufladung des Kondensators mit normalen physikalischen Meßgeräten gemessen und bestätigt werden kann.

Anzumerken ist noch, daß jeder normal veranlagte, gesunde Mensch mit der erfindungsgemäßen Sensoreinrichtung erfolgreich arbeiten kann. Sollte dies bei einem Benutzer einmal nicht der Fall sein, so ist dies nach einer entsprechenden Ausbildung möglich.

Außerdem ist die erfindungsgemäße Sensoreinrichtung im Aufbau einfach und im Volumen klein. Ferner ist sie besonders preisgünstig, da handelsübliche Kondensatoren verwendet werden können, die in größeren Stückzahlen gefertigt werden.

Bei der Erfindung handelt es sich um eine völlig neuartige Sensoreinrichtung, die einen großen Fortschritt für die Geobiologie- und Radiästhesieforschung bedeutet.

Vorzugsweise kann als untere Antenne ein Antennenring aus elektrisch leitendem Material vorgesehen sein, an dessen Unterseite eine Drahtpyramide, ein Drahtkorb oder eine Drahtspirale befestigt ist. Durch eine solche Maßnahme kann die Empfindlichkeit des erfindungsgemäßen Sensorelementes noch weiter verstärkt werden.

Damit die untere Antenne als offene Rundantenne wirkt, kann sie an einer Stelle unterbrochen sein.

Eine weitere Ausführung der Erfindung zeichnet sich dadurch aus, daß zwischen den Elektroden des Kondensators ein elektrischer Ausgleichswiderstand geschaltet ist, dessen Widerstandswert in Abstimmung mit der Kapazität und dem Dielektrikum des Kondensators so bemessen ist, daß der Kondensator bei der Benutzung der Sensoreinrichtung nur bis zu demjenigen elektrischen Spannungswert aufgeladen wird, bei dem eine optimale Bewegung des Sensorelementes erfolgt, jedoch eine diese Bewegung mindernde, überhöhte Kondensatoraufladung durch einen über den Ausgleichswiderstand fließenden Ausgleichsstrom verhindert wird. Mit einer derartigen Anordnung wird verhindert, daß der Kondensator seine maximale Ladespannung erreicht, keine weiteren Elektronen mehr freigesetzt werden können und dadurch die starke Spinnwirkung herabgesetzt wird. Durch Zwischenschaltung des Ausgleichswiderstandes an die Elektroden des Kondensators fließen über diesen Widerstand die Elektronen wieder ab. Während der Bewegung des Sensorelementes werden dann in und zwischen den Elektroden des Kondensators laufend weitere Elektronen freigesetzt, wodurch die Schub- und Spinnwirkung über sehr lange Zeit erhalten bleibt.

Vorzugsweise ist als obere Antenne ein Trägerstift vorgesehen, an dem die Haltemittel befestigt sind. Auf diese Weise wird die obere Antenne auch gleichzeitig zum Halten der Sensoreinrichtung verwendet.

Bei einer weiteren Ausführung der Erfindung weist der Kondensator plattenförmige Elektroden auf, die bei der Benutzung der Sensoreinrichtung im wesentlichen horizontal liegen. Ferner können vorzugsweise der Ausgleichswiderstand und dessen Verbindungsleitungen bei der Benutzung im wesentlichen horizontal liegen. Derartige Anordnungen sind für eine effektive Anzeigewirkung besonders vorteilhaft.

Eine weitere Ausgestaltung der Erfindung zeichnet sich dadurch aus, daß mehrere elektrische Kondensatoren auf einer dünnen, im wesentlichen strahlendurchlässigen Trägerplatte angeordnet sind. Durch eine Mehrzahl von Kondensatoren, die gemäß der Erfindung parallelgeschaltet sind, kann der Anzeigeeffekt ebenfalls verstärkt werden.

Vorzugsweise ist dabei die obere Antenne rechtwinklig auf der Trägerplatte angeordnet.

Die Kondensatoren können bei einer Weiterbildung dieser Ausführung parallel nebeneinander oder ringförmig zueinander angeordnet sein, was besonders zweckmäßige Anordnungen sind.

Alternativ hierzu ist auch eine Weiterbildung dieser Ausführung möglich, die sich dadurch auszeichnet, daß auf der Trägerplatte die Kondensatoren sternförmig angeordnet sind, die Verbindungsleitungen von den einen Elektroden sich radial in Richtung auf das Zentrum des Sensorelementes erstrecken und dort an die obere Antenne angeschlossen sind und die Verbindungsleitungen von den anderen Elektroden sich radial nach außen erstrecken und an die untere Antenne angeschlossen sind. Mit dieser Anordnung konnten sehr gute Ergebnisse erzielt werden.

Anstatt als obere Antenne einen Trägerstift vorzusehen, kann als obere Antenne auch alternativ ein oberer Antennenring aus elektrisch leitendem Material vorgesehen sein, an dessen Oberseite ein Tragbügel angebracht ist, an dem die Haltemittel befestigt sind. Durch eine solche Maßnahme kann auch die Empfindlichkeit der oberen Antenne noch weiter verstärkt werden.

Damit der obere Antennenring als offene Rundantenne wirken kann, kann er vorzugsweise an einer Stelle unterbrochen sein.

Besonders vorteilhaft für die gewünschte Empfindlichkeit ist eine Anordnung, bei der der obere Antennenring einen kleineren Durchmesser als der untere Antennenring besitzt.

Aus Symmetriegründen sollten beide Antennenringe parallel und koaxial zueinander angeordnet sein.

Bei einer Weiterbildung dieser Ausführung liegt jeder Kondensator zusammen mit der die Mittelpunkte beider Antennenringe miteinander verbindenden Achse in einer gemeinsamen Ebene. Auch der Ausgleichswiderstand kann in einer solchen Ebene liegen.

Bei sternförmiger Anordnung mehrerer Kondensatoren sind vorzugsweise die Winkelabstände zwischen den Ebenen konstant. Diese Anordnung hat nicht nur vorteilhafte Auswirkungen auf eine zu allen Seiten hin gleichmäßige Empfangscharakteristik, sondern erlaubt auch eine statisch besonders günstige, freitragende Befestigung des unteren Antennenrings über die Kondensatoren am oberen Antennenring.

Nachfolgend werden mehrere Ausführungsbeispiele der Erfindung anhand der beiliegenden Figuren näher erläutert. Es zeigen:

Fig. 1 eine Sensoreinrichtung in einer ersten Ausführung;

Fig. 2 eine Sensoreinrichtung in einer zweiten Ausführung; und

Fig. 3 eine Sensoreinrichtung in einer dritten Ausführung.

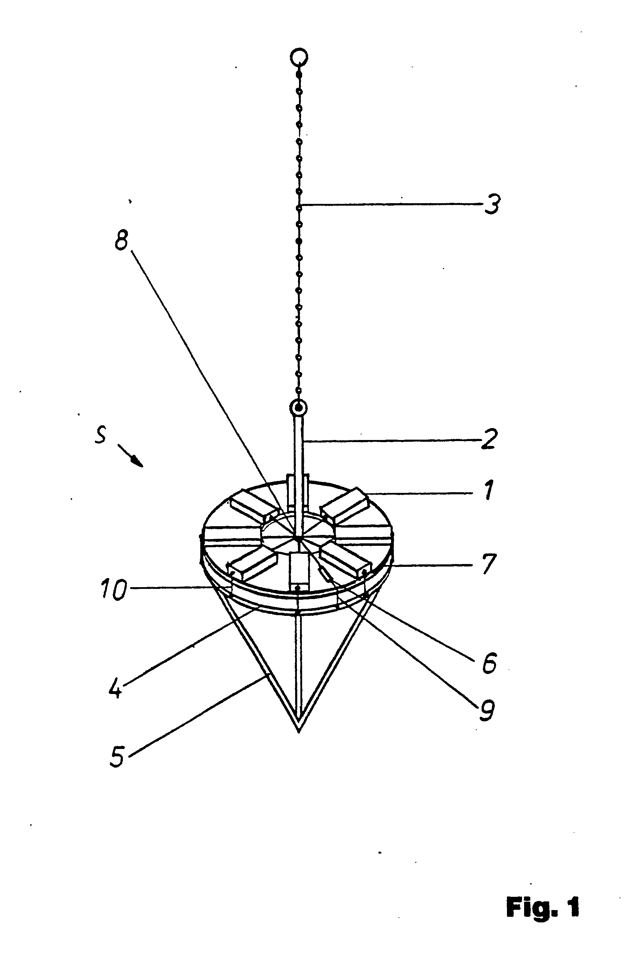

Die in der Fig. 1 dargestellte Sensoreinrichtung weist ein Sensorelement S mit einer dünnen strahlungsdurchlässigen Trägerplatte 7 auf, auf der mehrere elektrische Kondensatoren 1 sternförmig angeordnet sind. Die Kondensatoren 1 sind ebene Schichtkondensatoren ohne Kunststoffumhüllung mit einem Dielektrikum aus Polyäthylentephthalat. Derartige Kondensatoren enthalten plattenförmige Elektroden. Solche Kondensatoren werden in größeren Stückzahlen gefertigt und sind daher preisgünstig und haben außerdem ein kleines Volumen.

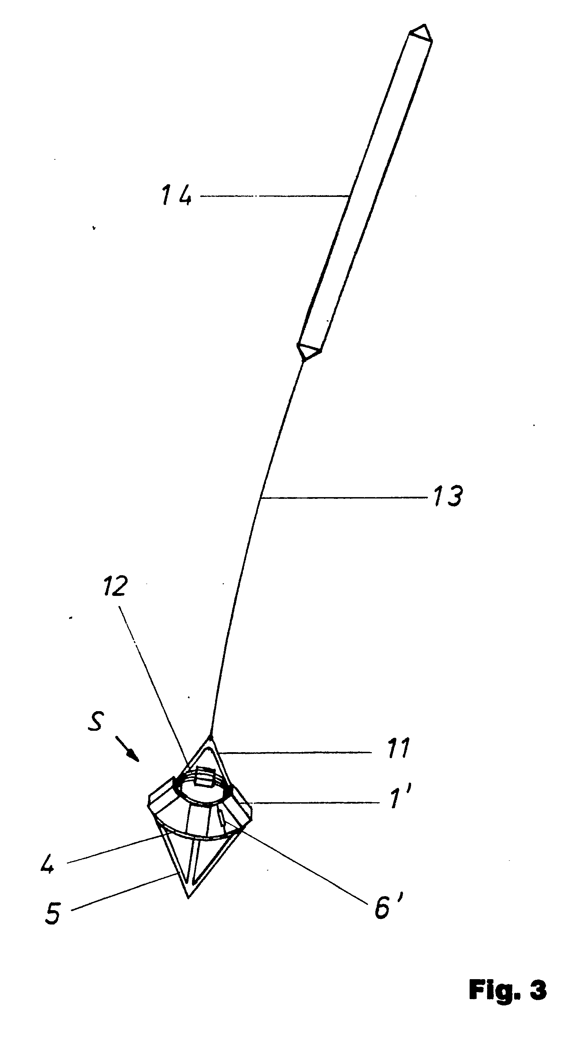

Die Trägerplatte 7 hat die Form einer kreisförmigen Scheibe, und die Kondensatoren 1 sind darauf so befestigt, daß deren plattenförmige Elektroden parallel zur Trägerplatte 7 und die beiden gegenüberliegenden Pole jedes Kondensators 1 radial liegen. Da bei erstrecken sich die Anschlußleitungen der radial nach innen gerichteten Pole sternförmig auf das Zentrum 8 des Sensorelementes S, das in der Mitte der kreisförmigen Trägerscheibe 7 liegt, und sind dort mit einem Trägerstift 2 mit Öse elektrisch leitend verbunden. Der Trägerstift 2 ragt rechtwinklig von der Trägerplatte 7 empor. Er dient zum Aufhängen des Sensorelementes S, indem an der Öse eine Trägerkette 3 befestigt ist, an der das Sensorelement hängt und die in der Hand des Benutzers gehalten wird. Alternativ zur in Fig. 1 dargestellten Trägerkette 3 kann auch ein Trägerfaden oder ein dünner Trägerfederstab verwendet werden (vgl. hierzu auch Fig. 3). Gleichzeitig wirkt der Trägerstift 2 und gegebenenfalls noch die daran befestigte Trägerkette 3 als oberhalb der Kondensatorebene liegende obere Antenne.

Die radial nach außen gerichteten Pole der Kondensatoren 1 sind über Anschlußleitungen 10 mit einem unteren Antennenring 4 elektrisch leitend verbunden, der unterhalb der Trägerplatte 7 angeordnet ist und entlang deren Umfanges verläuft. Am unteren Antennenring 4 ist eine nach unten gerichtete Drahtpyramide 5 befestigt. Der Antennenring 4 mit der daran befestigten Drahtpyramide 5 wirkt als untere Antenne. Alternativ zur Drahtpyramide 5 kann auch ein Drahtkorb oder eine Drahtspirale vorgesehen sein, da auch diese strahlungsdurchlässig sind. Die Drahtpyramide 5 ist dabei so angeordnet, daß deren Spitze zusammen mit dem Zentrum 8, dem Trägerstift 2 und der Trägerkette 3 auf einer rechtwinklig zur Trägerplatte 7 verlaufenden Gerade liegt.

Somit sind die Kondensatoren 1 zwischen dem als obere Antenne wirkenden Trägerstift 2 einerseits und dem als untere Antenne wirkenden Antennenring 4 mit der daran befestigten Drahtpyramide 5 parallelgeschaltet.

Zwischen den Elektroden der Kondensatoren 1 ist außerdem noch ein Ausgleichswiderstand 6 geschaltet, dessen elektrischer Widerstandswert so bemessen ist, daß die bei Benutzung entstehende Kondensatorladespannung nicht zu dem vollen Ladespannungswert ansteigen kann, sondern durch einen Ausgleichsstrom auf einem für die Bewegung des Sensorelementes S günstigen mittleren Spannungswert gehalten wird, der im Millivoltbereich liegt. Dabei sind der Ausgleichswiderstand 6 und dessen Verbindungsleitungen 9 oberhalb oder unterhalb der Trägerplatte 7 auf dieser horizontal liegend befestigt.

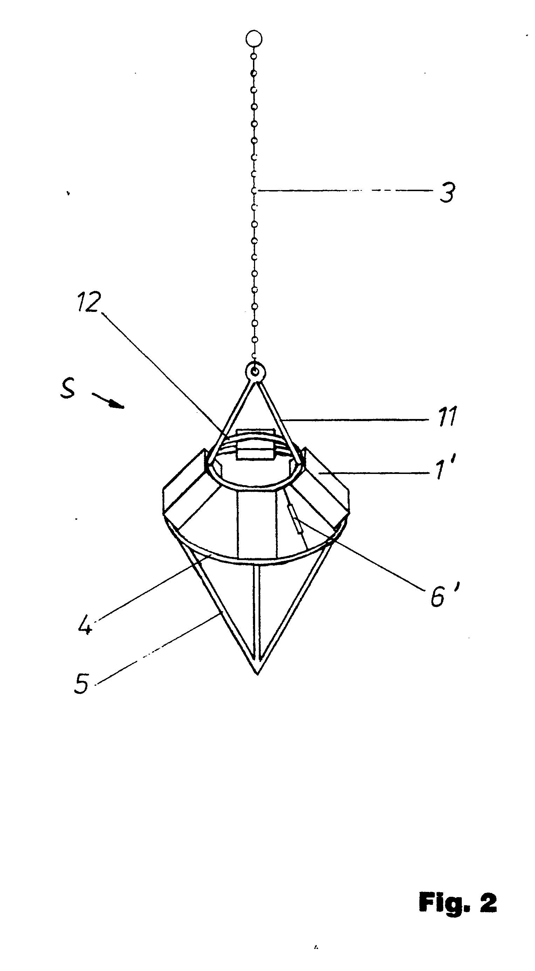

In Fig. 2 ist eine weitere Ausführung dargestellt, die sich von der Ausführung von Fig. 1 dadurch unterscheidet, daß die Trägerplatte fehlt und anstelle eines Trägerstiftes als obere Antenne ein oberer Antennenring 12 vorgesehen ist, an dessen Oberseite ein Tragbügel 11 angebracht ist, an dem die Trägerkette 3 befestigt ist. Wie Fig. 2 erkennen läßt, besitzt der obere Antennenring 12 einen kleineren Durchmesser als der untere Antennenring 4. Beide Antennenringe 4, 12 sind parallel und koaxial zueinander angeordnet, so daß die Mittelpunkte beider Antennenringe 4, 12 auf einer gemeinsamen Achse liegen, die mit der Achse der Trägerkette 3 zusammenfällt.

Die Kondensatoren 1' sind mit ihren Elektroden jeweils am oberen Antennenring 12 und am unteren Antennenring 4 befestigt. Somit ist der untere Antennen ring 4 in freitragender Anordnung über die Kondensatoren 1' am oberen Antennenring 12 gehaltert. Ferner ist auch ein Ausgleichswiderstand 6' vorgesehen, der in gleicher Weise beide Antennenringe 4, 12 miteinander verbindet.

Jeder Kondensator 1' und der Ausgleichswiderstand 6' liegen jeweils zusammen mit der die Mittelpunkte beider Antennenringe 4, 12 miteinander verbindenden Achse in einer gemeinsamen Ebene. Dabei sind die Kondensatoren 1' so zueinander angeordnet, daß sich jeweils zwei Kondensatoren 1' gegenüberliegen und somit jeweils zwei Kondensatoren 1' in einer Ebene liegen. Die Kondensatoren 1' sind sternförmig angeordnet, wobei die Winkelabstände zwischen den Ebenen konstant sind.

Bei dem in Fig. 2 gezeigten Ausführungsbeispiel sind vier Kondensatoren 1 vorgesehen, so daß die Winkelabstände der Ebenen jeweils zueinander 90° beträgt.

An dieser Stelle sei angemerkt, daß sowohl der obere Antennenring 12 gemäß dem Ausführungsbeispiel von Fig. 2 als auch der untere Antennenring 4 gemäß den Ausführungsbeispielen von Fig. 1 und 2 an einer Stelle durch eine kleine Lücke unterbrochen sein können, damit sie als offene Rundantennen wirken.

Die in Fig. 3 dargestellte Sensoreinrichtung unterscheidet sich von der Ausführung gemäß Fig. 2 dadurch, daß anstelle einer Trägerkette ein Federdraht 13 mit seinem einen Ende am Tragbügel 11 befestigt ist und an seinem anderen Ende ein Griffstück 14 aufweist. Somit kann die Sensoreinrichtung nicht nur in vertikal hängender, sondern auch in schräger oder horizontaler Lage benutzt werden. Hierzu braucht sie lediglich am Griffstück 14 des Federdrahtes 13 gehalten zu werden.

Es versteht sich von selbst, daß auch bei dem Ausführungsbeispiel gemäß Fig. 1 die Trägerkette 3 gegen den in Fig. 3 dargestellten Federdraht 13 ausgetauscht werden kann. Bei der Befestigung des Sensorelementes S am Federdraht 13 muß lediglich darauf geachtet werden, daß diese Befestigung nicht gelenkig, sondern starr ist.

Nachfolgend soll die Funktion der erfindungsgemäßen Sensoreinrichtung beschrieben werden.

Die Sensoreinrichtung basiert auf der Nutzung eines radiästhetisch-physikalischen Wirkungseffektes, den der Anmelder im Zuge seiner geobiologischen und radiästhetischen Forschungsarbeiten festgestellt hat. Aufgrund dieses Effektes entstehen bei der Bewegung des Sensorelementes S durch bestimmte Wirkungsmechanismen in und zwischen den Elektroden und den Dielektrika in den Kondensatoren freie Elektronen, wodurch jeder Kondensator auf eine Spannung im Millivoltbereich aufgeladen wird. Während des Aufladevorganges erfolgt gleichzeitig im Kondensator eine relativ starke seitliche Schub- und Spinnwirkung. Über Rechtsspinnzonen kreist das Sensorelement S nach rechts, über Linksspinnzonen nach links. Über Indifferenzzonen bewegt sich das Sensorelement S in Richtung des Zonenverlaufes.

Würden jedoch die Kondensatoren ihre maximale Ladespannung erreichen, würden keine weiteren Elektronen mehr frei, und die starke Spinnwirkung wäre beendet. Dies wird jedoch durch die Anschaltung des Ausgleichswiderstandes vermieden, wodurch über diesen Ausgleichswiderstand Elektronen wieder abfließen. Deshalb werden in und zwischen den Elektroden der Kondensatoren laufend weitere Elektronen freigesetzt, solange gependelt wird. Auf diese Weise bleibt die Schub- und Spinnwirkung über lange Zeiträume, gegebenenfalls stundenlang, erhalten. Somit besitzt das Sensorelement kein störendes Wechselverhalten, sondern zeigt die jeweilige geobiologische und radiästhetische Situation als hochempfindlicher Indikator klar und eindeutig an.

Der Aufladeeffekt der Kondensatoren kann mit physikalischen Meßmitteln auf folgende Weise überprüft und nachgewiesen werden:

Vor Beginn der Messung werden die Kondensatorpole für kurze Zeit kurzgeschlossen, so daß die Kondensatoren völlig entladen werden. Dies kann beispielsweise durch ein Millivoltmeter überprüft werden. Sofern ein Ausgleichswiderstand vorhanden ist, werden die zu ihm führenden Leitungen während der Kontrollmessung unterbrochen. Wenn anschließend während des Pendelvorgangs über einer Rechtsspinnzone oder über einer Linksspinnzone gependelt wird, beschreibt das Sensorelement S Kreise. Nach 30 bis 150 Kreisbewegungen werden die Kreise stetig kleiner, und der seitliche Schubeffekt wird stetig geringer, bis die Kondensatoren aufgeladen sind. Dann beträgt die Kondensatorladespannung etwa 3 bis 100 mV und kann mit jedem handelsüblichen Millivoltmeter mit hohem Eingangswiderstand gemessen werden. Dabei ist die Kondensatorladespannung natürlich abhängig von dem Dielektrikum und der Kapazität der Kondensatoren.

Wenn die Kondensatoren durch kurzzeitiges Kurzschließen ihrer Pole erneut entladen werden, kann dieser Vorgang beliebig oft wiederholt werden.

## Ansprüche

1. Sensoreinrichtung zur Detektion von kosmisch-terrestrischen und terrestrisch-kosmischen Energiefeldern und Energieflüssen, mit einem Sensorelement (S) und mit flexiblen Haltemitteln (3; 13, 14) zum Halten des Sensorelementes (S) durch einen Benutzer derart, daß das Sensorelement (S) gegenüber dem Benutzer bewegbar bleibt,

dadurch gekennzeichnet, daß das Sensorelement (S) mindestens einen elektrischen Kondensator (1) aufweist, dessen eine Elektrode mit einer oberhalb des Kondensators (1) angeordneten und die Haltemittel (3; 13, 14) aufweisenden oberen Antenne (2; 11, 12) und dessen andere Elektrode mit einer unterhalb des Kondensators (1) angeordneten unteren Antenne (4, 5) elektrisch leitend verbunden ist.

2. Sensoreinrichtung nach Anspruch 1, dadurch gekennzeichnet, daß als untere Antenne ein unterer Antennenring (4) aus elektrisch leitendem Material vorgesehen ist, an dessen Unterseite eine Drahtpyramide (S), ein Drahtkorb oder eine Drahtspirale befestigt ist.

3. Sensoreinrichtung nach Anspruch 2, dadurch gekennzeichnet, daß der untere Antennenring (4) an einer Stelle unterbrochen ist.

4. Sensoreinrichtung nach einem der Ansprüche 1-3, dadurch gekennzeichnet, daß zwischen den Elektroden des Kondensators (1) ein elektrischer Ausgleichswiderstand (6) geschaltet ist, dessen Widerstandswert in Abstimmung mit der Kapazität und dem Dielektrikum des Kondensators so bemessen ist, daß der Kondensator (1) bei Benutzung der Sensoreinrichtung nur bis zu demjenigen elektrischen Spannungswert aufgeladen wird, bei dem eine optimale Bewegung des Sensorelementes (S) erfolgt, jedoch eine diese Bewegung mindernde, überhöhte Kondensatoraufladung durch einen über den Ausgleichswiderstand (6) fließenden Ausgleichsstrom verhindert wird.

5. Sensoreinrichtung nach einem der Ansprüche 1 bis 4, dadurch gekennzeichnet, daß als obere Antenne ein Trägerstift (2) vorgesehen ist, an dem die Haltemittel (3) befestigt sind.

6. Sensoreinrichtung nach einem der Ansprüche 1 bis 5, dadurch gekennzeichnet, daß die Elektroden des Kondensators (1) plattenförmig sind und bei der Benutzung der Sensoreinrichtung im wesentlichen horizontal liegen.

7. Sensoreinrichtung nach Anspruch 5 oder 6, dadurch gekennzeichnet, daß der Ausgleichswiderstand (6) und dessen Verbindungsleitungen (9) im wesentlichen horizontal liegen.

8. Sensoreinrichtung nach einem der Ansprüche 1 bis 7, dadurch gekennzeichnet, daß mehrere elektrische Kondensatoren (1) auf einer dünnen, im wesentlichen strahlendurchlässigen Trägerplatte (7) angeordnet sind.

9. Sensoreinrichtung nach Anspruch 8, dadurch gekennzeichnet, daß die obere Antenne (2) rechtwinklig auf der Trägerplatte (7) angeordnet ist.

10. Sensoreinrichtung nach Anspruch 8 oder 9, dadurch gekennzeichnet, daß die Kondensatoren (1) parallel nebeneinander oder ringförmig zueinander angeordnet sind.

11. Sensoreinrichtung nach Anspruch 8 oder 9, dadurch gekennzeichnet, daß auf der Trägerplatte (7) die Kondensatoren (1) sternförmig angeordnet sind, die Verbindungsleitungen von den einen Elektroden sich radial in Richtung auf das Zentrum (8) des Sensorelementes (S) erstrecken und dort an die obere Antenne (2) angeschlossen sind und die Verbindungsleitungen von den anderen Elektroden sich radial nach außen erstrecken und an die untere Antenne (4,5) angeschlossen sind.

12. Sensoreinrichtung nach Anspruch 2 oder 3, dadurch gekennzeichnet, daß als obere Antenne ein oberer Antennenring (12) aus elektrisch leitendem Material vorgesehen ist, an dessen Oberseite ein Tragbügel (11) angebracht ist, an dem die Haltemittel (3; 13, 14) befestigt sind.

13. Sensoreinrichtung nach Anspruch 12, dadurch gekennzeichnet, daß der obere Antennenring (12) an einer Stelle unterbrochen ist.

14. Sensoreinrichtung nach Anspruch 2 und Anspruch 12 oder 13, dadurch gekennzeichnet, daß der obere Antennenring (12) einen kleineren Durchmesser als der untere Antennenring (4) besitzt.

15. Sensoreinrichtung nach einem der Ansprüche 12 bis 14, dadurch gekennzeichnet, daß beide Antennenringe (4, 12) parallel und koaxial zueinander angeordnet sind.

16. Sensoreinrichtung nach den Ansprüchen 14 und 15, dadurch gekennzeichnet, daß jeder Kondensator (1') zusammen mit der die Mittelpunkte beider Antennenringe (4, 12) miteinander verbindenden Achse in einer gemeinsamen Ebene liegt.

17. Sensoreinrichtung nach den Ansprüchen 16 und 3, dadurch gekennzeichnet, daß der Ausgleichswiderstand (6') ebenfalls in einer solchen Ebene liegt.

18. Sensoreinrichtung nach Anspruch 16 oder 17, dadurch gekennzeichnet, daß bei sternförmiger Anordnung mehrere Kondensatoren (1') die Winkelabstände zwischen den Ebenen konstant sind.

19. Sensoreinrichtung nach einem der Ansprüche 1 -18, dadurch gekennzeichnet, daß die Haltemittel als Kette (3), Faden oder dünner elastischer Federdraht (13) ausgebildet sind.

**Fig. 1**

**Fig. 2**

**Fig. 3**